(19) Europäisches Patentamt
European Patent Office
Office européen des brevets

(11) **EP 4 360 456 A1**

(12) **EUROPEAN PATENT APPLICATION**
published in accordance with Art. 153(4) EPC

(43) Date of publication:
**01.05.2024 Bulletin 2024/18**

(21) Application number: **22827738.0**

(22) Date of filing: **22.06.2022**

(51) International Patent Classification (IPC):
*A01N 37/44* (2006.01)       *A01N 37/02* (2006.01)
*A01N 65/03* (2009.01)       *A01P 3/00* (2006.01)

(52) Cooperative Patent Classification (CPC):
**A01N 37/02; A01N 37/44; A01N 65/03; A01P 3/00**

(86) International application number:
**PCT/ES2022/070394**

(87) International publication number:
**WO 2022/269118 (29.12.2022 Gazette 2022/52)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **22.06.2021 ES 202130585**

(71) Applicant: **Universidad de Almeria
04120 La Cañada de San Urbano (Almeria) (ES)**

(72) Inventors:
• **NAVARRO LÓPEZ, Elvira
04120 La Cañada de San Urbano, Almería (ES)**

• **CERÓN GARCÍA, Ma Del Carmen
04120 La Cañada de San Urbano, Almería (ES)**
• **LÓPEZ ROSALES, Lorenzo
04120 La Cañada de San Urbano, Almería (ES)**
• **SÁNCHEZ MIRÓN, Asterio
04120 La Cañada de San Urbano, Almería (ES)**
• **GARCÍA CAMACHO, Francisco
04120 La Cañada de San Urbano, Almería (ES)**
• **MOLINA GRIMA, Emilio
04120 La Cañada de San Urbano, Almería (ES)**

(74) Representative: **Hoffmann Eitle
Hoffmann Eitle S.L.U.
Paseo de la Castellana 140, 3a planta
Edificio LIMA
28046 Madrid (ES)**

(54) **PHYTOSANITARY FORMULATION**

(57)     The present invention belongs to the field of phytosanitary products or biopesticides. Specifically, the invention relates to the use of supernatant obtained from a culture of algae of the genus Amphidinium to obtain a phytosanitary formulation or biopesticide, in particular an antifungal formulation.

**EP 4 360 456 A1**

**Description**

Field of the Invention

The present invention belongs to the field of phytosanitary products or biopesticides. Specifically, the invention relates to the use of supernatant obtained from a culture of algae from the genus *Amphidinium* to obtain a phytosanitary formulation or biopesticide, in particular an antifungal formulation.

Prior Art

*Amphidinium carterae* is a marine microalga from the dinoflagellate group. The potential of dinoflagellates as a source for obtaining various products of great interest in agriculture has gained a lot of interest recently. Plant diseases caused by fungal and bacterial infection represent a significant problem for agricultural crops. Furthermore, the use of sustainable production practices which involve, for example, replacing the use of chemicals, particularly fertilizers and pesticides, with natural and biological substances, is increasingly sought. In this sense, microalgae, which include the dinoflagellate group, and cyanobacteria have positioned themselves as potential sources for extracting and obtaining these products of great interest. These groups of photosynthetic organisms are represented by a wide variety of species, adapted to very diverse ecological habitats. To survive in a highly competitive environment, often experiencing significant fluctuations of biotic and abiotic factors, these organisms have developed defensive and adaptive strategies, including the synthesis of a widely diverse compounds obtained by different metabolic pathways. Some remarkable compounds synthesized by these species are: substances with antioxidant activity, such as carotenoids and polyphenols; plant growth promoting compounds, such as phytohormones and sterols; substances with antimicrobial activity, such as fatty acids, polysaccharides, polyketides, and substances with anti-predatory or allelopathic activity, such as polyketides or other similar molecules. Many of these metabolites have very specific and complex chemical structures that are not found in terrestrial organisms, which makes it difficult to reproduce them by chemical synthesis.

Phytosanitary substances are products obtained from a living microorganism or a natural product used to prevent, repel, kill, or mitigate any pest or agent that causes damage to plant crops, humans, or other animals. Pests can be insects, animals, unwanted plants, microorganisms (bacteria, fungi, viruses), and prions (proteins which can act as infectious agents).

There is currently an unmet need to find new phytosanitary products that serve as an alternative to conventional pesticides, thereby preventing the presence of hazardous chemicals in foods, contrary to what may occur with the use of said pesticides.

The present invention seeks to solve said need, and therefore a new strategy intended for obtaining a phytosanitary formulation is proposed.

Description of the invention

Brief Description of the Invention

As indicated above, the present invention relates to the use of supernatant obtained from a culture of dinoflagellates, in particular from algae from the genus *Amphidinium,* to obtain a phytosanitary formulation.

In that sense, the present invention proposes a system for obtaining phytosanitary substances applicable in agriculture from the supernatant of cultures of marine microalgae from the genus *Amphidinium.* The proposed process involves three steps: (1) culturing *Amphidinium;* (2) obtaining a methanol extract with phytosanitary activity from the culture supernatant through a series of steps intended for obtaining those substances of interest with the highest purity possible; (3) preparing an aqueous solution with extract concentrations of preferably 1-10 g/L, preferably 2-10 g/L, for use as a phytosanitary product.

Therefore, the present invention shows how to obtain phytosanitary substances using supernatant from the culture of dinoflagellates, in particular algae from the genus *Amphidinium,* as a raw material, and a sequence of steps suitably designed for maximizing the recovery of said substances. It is a robust and scalable process. Furthermore, it is a cost-competitive process, as it allows the entire culture to be used as a whole, with the supernatant being intended for obtaining phytosanitary substances and the biomass being intended for obtaining other products of great interest such as carotenoids, polyunsaturated fatty acids, and bioactive compounds such as, for example, amphidinols and amphidinolides, etc., which increases process cost-effectiveness.

Particularly, the process comprises:

- Producing a biomass from dinoflagellates using a photobioreactor. The size of the photobioreactor is determined by production needs and can be operated in a fed-batch mode to generate a quasi-constant flow of dinoflagellate culture as a product.

- A step of harvesting the culture, for example, by means of centrifugation, or any other step for separating cells from the supernatant if it is a suspended culture. Given that the focus is on compounds with antimicrobial properties present in the culture medium, it will be necessary to collect the supernatant to continue with the process. The resulting biomass will be used to obtain other products of great interest.
- It is necessary to provide a step (preferably microfiltration below 0.22 μm) to remove other microorganisms such as bacteria and other components that may interfere in the biopesticide action of the molecules of interest contained in the supernatant.
- A step of extracting the biomolecules of interest, for example, a solid-liquid type extraction by means of fixed bed adsorption chromatography through C-18 filler columns is then provided to produce a methanol extract enriched in the substances of interest (active biomolecules and other antifungal products).
- Finally, a concentration step, such as evaporation, will be performed to remove the solvent, for example, methanol, in which amphidinols are suspended, to finally resuspend same in water and adjust the final concentration of the product.

As observed in Example 1, Example 2, and Example 3 shown in the present invention, the formulation obtained from the supernatant originating from the culture of algae from the genus *Amphidinium* shows a potent phytosanitary effect, in particular an antifungal effect.

In that sense, the first aspect of the present invention relates to a phytosanitary formulation comprising alanine, phenylalanine, and formate (in particular sodium formate).

The second aspect of the present invention relates to a phytosanitary formulation, consisting of alanine, phenylalanine, and formate (in particular sodium formate).

In a particular aspect, the phytosanitary formulation of the invention comprises or consists of alanine, phenylalanine, and formate, which are at a concentration between 2 and 10 g/L.

In a particular aspect, the phytosanitary formulation of the invention comprises or consists of alanine, phenylalanine, and formate, wherein alanine is at a concentration of about 10 g/L, phenylalanine is at a concentration of about 10 g/L, and formate is at a concentration of about 7.5 g/L.

In a particular aspect, the phytosanitary formulation of the invention further comprises amphidinols.

In a particular aspect, the phytosanitary formulation of the invention further comprises amphidinols at a concentration of less than 2 g/L.

The third aspect of the present invention relates to a method (hereinafter method of the invention) for obtaining the phytosanitary formulation of the invention which comprises: a) providing algae from the genus *Amphidinium* in a culture medium suitable for the growth thereof, b) obtaining supernatant once the culture is processed, and c) isolating the active components present in the supernatant.

The fourth aspect of the present invention relates to the use of supernatant obtained from a culture of algae from the genus *Amphidinium* to obtain the phytosanitary formulation of the invention.

The fifth aspect of the present invention relates to a formulation which can be obtained through the method of the invention. In a particular aspect, the formulation comprises or consists of at least one of the following compounds: acetate, ethanol, choline, glycerol, amphidinols, phenylalanine, formate, alanine, and lactate, preferably it comprises or consists of: alanine, phenylalanine, and sodium formate.

In a preferred aspect, the phytosanitary formulation of the invention is an antifungal formulation, preferably against fungi from the genus *Fusarium,* in particular *Fusarium oxysporum.* However, said formulation may be used against different types of fungi, for example:

A)

*Acrocalymma, Acrocalymma medicaginis,*
*Acrodontium, Acrodontium simplex*
*Acrophialophora, Acrophialophora fusispora,*
*Acrosporium, Acrosporium tingitaninum,*
*Aecidium, Aecidium aechmantherae, Aecidium amaryllidis, Aecidium breyniae, Aecidium campanulastri, Aecidium cannabis, Aecidium cantensis, Aecidium caspicum, Aecidium foeniculi, Aecidium narcissi,*
*Ahmadiago,*
*Albonectria, Albonectria rigidiuscula,*
*Allodus, Allodus Podophylli,*
*Alternaria, Alternaria alternata, Alternaria brassicae, Alternaria brassicicola, Alternaria carthami, Alternaria cinerariae, Alternaria dauci, Alternaria dianthi, Alternaria dianthicola,*
*Alternaria euphorbiicola, Alternaria helianthi, Alternaria helianthicola, Alternaria japónica,*

*Alternaria leucanthemi, Alternaria limicola, Alternaria linicola, Alternaria padwickii, Alternaria panax, Alternaria radicina, Alternaria raphani, Alternaria saponariae, Alternaria senecionis, Alternaria solani, Alternaria tenuissima, Alternaria triticina, Alternaria zinniae,*
*Amphobotrys, Amphobotrys ricini,*
*Anguillosporella, Anguillosporella vermiformis,*
*Anthostomella, Anthostomella pullulons,*
*Antrodia, Antrodia albida, Antrodia serialiformis, Antrodia serialis,*
*Apiospora, Apiospora mountain,*
*Appendiculella,*
*Armillaria, Armillaria heimii, Armillaria sinapina, Armillaria socialis, Armillaria tabescens,*
*Arthrocladiella, Arthuriomyces, Arthuriomyces peckianus,*
*Ascochyta, Ascochyta asparagina, Ascochyta bohémica, Ascochyta caricae, Ascochyta doronici, Ascochyta fabae f. sp. lentis, Ascochyta graminea, Ascochyta hordei,*
*Ascochyta humuli, Ascochyta pisi, Ascochyta prasadii, Ascochyta sorghi, Ascochyta spinaciae, Ascochyta tarda, Ascochyta tritici, Ascospora, Ascospora ruborum,*
*Aspergillus, Aspergillus aculeatus, Aspergillus scherianus, Aspergillus niger,*
*Asperisporium, Asperisporium caricae,*
*Asteridiella,*
*Asteroma, Asteroma caryae,*
*Athelia, Athelia arachnoidea, Athelia rolfsii,*
*Aurantiporus, Aurantiporus ssilis,*
*Aureobasidium, Aureobasidium pullulons,*

B)

*Bambusiomyces, Banana freckle,*
*Bayoud disease,*
*Beniowskia, Beniowskia sphaeroidea,*
*Bionectria, Bionectria ochroleuca*
*Bipolaris, Bipolaris cactivora, Bipolaris cookei, Bipolaris incurvata, Bipolaris saccharication,*
*Biscogniauxia, Biscogniauxia capnodes, Biscogniauxia marginate,*
*Bjerkandera, Bjerkandera adusta*
*Black sigatoka,*
*Blakeslea, Blakeslea trispora,*
*Blumeria, Blumeria graminis,*
*Botryodiplodia, Botryodiplodia oncidii, Botryodiplodia ulmicola,*
*Botryosphaeria, Botryosphaeria cocogena, Botryosphaeria dothidea, Botryosphaeria marconii, Botryosphaeria obtusa, Botryosphaeria rhodina, Botryosphaeria ribis,*
*Botryosphaeria stevensii,*
*Botryosporium, Botryosporium pulchrum,*
*Botryotinia, Botryotinia fuckeliana, Botryotinia polyblastis*
*Botrytis, Botrytis allii, Botrytis anthophila, Botrytis cinerea, Botrytis fabae, Botrytis narcissicola,*
*Boxwood blight,*
*Brachybasidiaceae,*
*Brasiliomyces, Brasiliomyces malachrae,*
*Briosia, Briosia ampelophaga,*
*Brown ring patch, Buckeye rot of tomato,*
*Bulbomicrosphaera,*

C)

*Cadophora, Cadophora malorum*
*Caespitotheca,*
*Calonectria, Calonectria ilicicola, Calonectria indusiata, Calonectria kyotensis,*
*Calonectria pyrochroa, Calonectria quinqueseptata,*
*Camarotella, Camarotella acrocomiae, Camarotella costaricensis,*
*Canna rust,*

*Capitorostrum*

*Capnodium, Capnodium Footii, Capnodium mangiferum, Capnodium ramosum, Capnodium theae,*

*Cephalosporium, Cephalosporium gramineum,*

*Ceratobasidium, Ceratobasidium cereal, Ceratobasidium cornigerum, Ceratobasidium noxium, Ceratobasidium ramicola, Ceratobasidium setariae, Ceratobasidium stevensii,*

*Ceratocystis, Ceratocystis adiposa, Ceratocystis coerulescens, Ceratocystis mbriata, Ceratocystis moniliformis, Ceratocystis oblonga, Ceratocystis obpyriformis, Ceratocystis paradoxa, Ceratocystis pilifera, Ceratocystis pluriannulata, Ceratocystis polyconidia,*

*Ceratocystis tanganyicensis, Ceratocystis zombamontana,*

*Ceratorhiza, Ceratorhiza hydrophila,*

*Ceratospermopsis,*

*Cercoseptoria, Cercoseptoria ocellata, Cercosporella, Cercosporella ruby,*

*Cercospora, Cercospora, Cercospora apii, Cercospora apii f. sp. clerodendri,*

*Cercospora apiicola, Cercospora arachidicola, Cercospora asparagi, Cercospora atroliformis, Cercospora beticola, Cercospora brachypus, Cercospora brassicicola,*

*Cercospora brunkii, Cercospora cannabis, Cercospora cantuariensis, Cercospora capsici, Cercospora carotae, Cercospora corylina, Cercospora fuchsiae, Cercospora fusca, Cercospora fusimaculans, Cercospora gerberae, Cercospora halstedii,*

*Cercospora handelii, Cercospora hayi, Cercospora hydrangeae, Cercospora kikuchii,*

*Cercospora lentis, Cercospora liquidambaris, Cercospora longipes, Cercospora longissima, Cercospora mamaonis, Cercospora mangiferae, Cercospora medicaginis,*

*Cercospora melongenae, Cercospora minuta, Cercospora nicotianae, Cercospora odontoglossi Cercospora papayae, Cercospora penniseti, Cercospora pisa-sativae,*

*Cercospora platanicola, Cercospora puderii, Cercospora pulcherrima, Cercospora rhapidicola, Cercospora rosicola, Cercospora sojina, Cercospora solani, Cercospora solani-tuberosi, Cercospora sor ghee, Cercospora theae, Cercospora tuberculans,*

*Cercospora vexans, Cercospora vicosae, Cercospora zeae-maydis, Cercospora zebrina, Cercospora zonata, Ceriporia, Ceriporia spissa, Ceriporia xylostromatoides,*

*Cerrena, Cerrena unicolor,*

*Ceuthospora, Ceuthospora lauri,*

*Choanephora, Choanephora cucurbitarum, Choanephora infundibulifera,*

*Chrysanthemum, Chrysanthemum white rust,*

*Chrysomyxa, Chrysomyxa cassandrae, Chrysomyxa, Chrysomyxa himalensis,*

*Chrysomyxa ledi, Chrysomyxa ledi var. rhododendri, Chrysomyxa ledicola, Chrysomyxa nagodhii, Chrysomyxa neoglandulosi, Chrysomyxa piperiana, Chrysomyxa pirolata,*

*Chrysomyxa pyrolae, Chrysomyxa reticulata, Chrysomyxa roanensis, Chrysomyxa succinea,*

*Cladosporium, Cladosporium arthropodii, Cladosporium cladosporioides, Cladosporium cladosporioides f. sp. pisicola, Cladosporium cucumerinum, Cladosporium herbarum,*

*Cladosporium musae, Cladosporium oncobae*

*Claviceps purpurea*

*Climacodon, Climacodon pulcherrimus, Climacodon septentrionalis*

*Clitocybe, Clitocybe parasitica,*

*Clonostachys rosea (f. Rosea),*

*Clypeoporthe, Clypeoporthe iliau,*

*Cochliobolus, Cochliobolus, Cochliobolus carbonum, Cochliobolus cymbopogonis, Cochliobolus hawaiiensis, Cochliobolus heterostrophus, Cochliobolus lunatus, Cochliobolus miyabeanus, Cochliobolus ravenelii, Cochliobolus sativus, Cochliobolus setariae, Cochliobolus spicifer, Cochliobolus stenospilus, Cochliobolus tuberculatus,*

*Cochliobolus victoriae,*

*Coleosporium, Coleosporium helianthi, Coleosporium ipomoeae, Coleosporium madiae, Coleosporium pacicum, Coleosporium tussilaginis,*

*Colletotrichum, Colletotrichum acutatum, Colletotrichum arachidis, Colletotrichum capsici, Colletotrichum cereals, Colletotrichum coffeanum, Colletotrichum crassipes,*

*Colletotrichum dematium, Colletotrichum dematium f. spinaciae, Colletotrichum derridis, Colletotrichum destructivum, Colletotrichum gloeosporioides, Colletotrichum wisteria, Colletotrichum gossypii, Colletotrichum graminicola, Colletotrichum higginsianum, Colletotrichum kahawae, Colletotrichum lindemuthianum, Colletotrichum Kingdom,*

*Colletotrichum mangenotii, Colletotrichum musae, Colletotrichum nigrum, Colletotrichum orbiculare, Colletotrichum pisi, Colletotrichum sublineolum, Colletotrichum trichellum,*

*Colletotrichum trifolii, Colletotrichum truncatum,*

*Conidiosporomyces,*

*Coniella, Coniella castaneicola, Coniella diplodiella, Coniella fragariae,*

*Coniothecium, Coniothecium chomatosporum,*

*Coniothyrium, Coniothyrium-celtidis australis, Coniothyrium henriquesii, Coniothyrium rosarum, Coniothyrium wernsdorae,*

*Coprinopsis, Coprinopsis psychromorbida,*

*Cordana, Cordana johnstonii, Cordana musae,*

*Coriolopsis occosa, Corn gray leaf spot,*

*Corticium, Corticium invisum, Corticium penicillatum, Corticium theae,*

*Coryneopsis, Coryneopsis rubi,*

*Corynespora, Corynespora cassiicola,*

*Claviceps, Claviceps fusiformis, Claviceps purpurea, Claviceps sorghi, Claviceps zizaniae, Coryneum, Coryneum rhododendri,*

*Covered smut,*

*Crinipellis, Crinipellis sarmentosa,*

*Cronartium, Cronartium ribicola,*

*Cryphonectriaceae, Cryptobasidiaceae,*

*Cryptocline, Cryptocline cyclaminis*

*Cryptomeliola,*

*Cryptosporella, Cryptosporella umbrina,*

*Cryptosporiopsis, Cryptosporiopsis tarraconensis,*

*Cryptosporium, Cryptosporium minimum,*

*Curvularia, Curvularia lunata, Curvularia caricae-papayae, Curvularia penniseti,*

*Curvularia senegalensis, Curvularia trifolii,*

*Cyclaneusma needle cast,*

*Cylindrocarpon, Cylindrocarpon ianthothele, Cylindrocarpon magnusianum,*

*Cylindrocarpon musae,*

*Cylindrocladiella, Cylindrocladiella camelliae, Cylindrocladiella parva,*

*Cylindrocladium, Cylindrocladium clavatum, Cylindrocladium lanceolatum,*

*Cylindrocladium peruvianum, Cylindrocladium pteridis,*

*Cylindrosporium, Cylindrosporium cannabinum, Cylindrosporium juglandis,*

*Cylindrosporium ruby,*

*Cymadothea, Cymadothea trifolii*

*Cytospora, Cytospora palmarum, Cytospora personata, Cytospora saccharication,*

*Cytospora sacculus, Cytospora terebinthi,*

*Cytosporina, Cytosporina ludibunda,*

D)

*Dactuliophora, Dactuliophora elongata,*

*Davidiella, Davidiella dianthi, Davidiella Tassiana,*

*Deightoniella, Deightoniella papuana, Deightoniella torulosa,*

*Dendrophora, Dendrophora marconii, Dendrophora erumpens,*

*Denticularia, Denticularia mangiferae,*

*Dermea pseudotsugae, diaporthaceae,*

*Diaporthe, Diaporthe arctii, Diaporthe dulcamarae, Diaporthe eres, Diaporthe helianthi,*

*Diaporthe lagunensis, Diaporthe lokoyae, Diaporthe melonis, Diaporthe orthoceras,*

*Diaporthe pernicious, Diaporthe phaseolorum, Diaporthe phaseolorum, Diaporthe phaseolorum, Diaporthe rudis, Diaporthe tanakae, Diaporthe toxica,*

*Dicarpella, Dicarpella dryina,*

*Didymella, Didymella applanata, Didymella bryoniae, Didymella fabae, Didymella lycopersici, Didymella rabiei*

*Didymosphaeria, Didymosphaeria arachidicola, Didymosphaeria taiwanensis,*

*Dilophospora, Dilophospora alopecuri,*

*Dimeriella, Dimeriella saccharication*

*Diplocarpon, Diplocarpon mespili, Diplocarpon rosae,*

*Diplodia, Diplodia allocellula, Diplodia laelio-cattleyae, Diplodia manihoti, Diplodia paraphysaria, Diplodia seriata, Diplodia theae-sinensis,*
*Discosia, Discosia artocreas,*
*Discostroma, Discostroma corticola,*
*Distocercospora, Distocercospora livistonae*
*Dothiorella, Dothiorella brevicollis, Dothiorella dominicana, Dothiorella dulcispinae,*
*Dothiorella gregaria,*
*Drechslera, Drechslera avenacea, Drechslera campanulata, Drechslera dematioidea,*
*Drechslera gigantea, Drechslera wisteria, Drechslera musae-sapientium, Drechslera teresf. maculata,*
*Drechslera wirreganensis,*

E)

*Eballistra, Eballistra lineata, Eballistra oryzae,*
*Eballistraceae,*
*Echinodontium, Echinodontium ryvardenii, Echinodontium tinctorium, Ectendomeliola,*
*Elsinoë, Elsinoë ampelina, Elsinoë batatas, Elsino6 brasiliensis, Elsino6 leucospila,*
*Elsinoë randii, Elsino6 rosarum, Elsino6 saccharication, Elsinoë theae, Elsinoë Veneta,*
*Endomeliola,*
*Endothia, Endothia radicalis,*
*Endothiella, Endothiella gyrosa,*
*Entorrhizomycetes,*
*Entyloma, Entyloma ageratinae, Entyloma dahlia, Entyloma ellisii,*
*Epicoccum, Epicoccum nigrum,*
*Eremothecium, Eremothecium coryli, Eremothecium gossypii*
*Erisyphe, Erysiphe necator, Erysiphe betae, Erysiphe brunneopunctata, Erysiphe cichoracearum, Erysiphe cruciferarum, Erysiphe graminis f. sp. A venae, Erysiphe graminis f. sp. tritici, Erysiphe heraclei, Erysiphe pisi, Erysiphales, Exobasidiaceae,*
*Erysiphe, Erysiphe necator*
*Exobasidium burtii, Exobasidium reticulatum, Exobasidium vacinii var. japonicum,*
*Exobasidium vacinii-uliginosi, Exobasidium vexans,*
*Exophiala alcalophila, Exophiala, Exophiala angulospora, Exophiala attenuata,*
*Exophiala calicioid, Exophiala castellana, Exophiala dermatitidis, Exophiala dopicola,*
*Exophiala exophialae, Exophiala heteromorpha, Exophiala hongkongensis, Exophiala jeanselmei, Exophiala lecanii-corni, Exophiala mansonii, Exophiala mesophila,*
*Exophiala moniliae, Exophiala negronii, Exophiala phaeomuriformis, Exophiala pisciphila, Exophiala psychrophila, Exophiala salmonis, Exophiala spinifera,*

F)

*Fomes, Fomes lamaënsis,*
*Fomitopsis, Fomitopsis rosea,*
*Fusarium, Fusarium ane, Fusarium arthrosporioides, Fusarium avenaceum, Fusarium crookwellense, Fusarium culmorum, Fusarium graminearum, Fusarium jikuroi, Fusarium moniliforme, Fusarium incarnatum, Fusarium solani, Fusarium langsethiae, Fusarium mangiferae, Fusarium oxysporum f albedinis, Fusarium oxysporum f asparagi, Fusarium oxysporum f batatas, Fusarium oxysporum f betae, Fusarium oxysporum f cannabis, Fusarium oxysporum f carthami, Fusarium oxysporum f cattleyae, Fusarium oxysporum f ciceris, Fusarium oxysporum f Coffea, Fusarium oxysporum f Cúbense, Fusarium oxysporum f cyclaminis, Fusarium oxysporum f dianthi, Fusarium oxysporum f lentis,*
*Fusarium oxysporum f Kingdom, Fusarium oxysporum f lycopersici, Fusarium oxysporum f medicaginis, Fusarium oxysporum f pisi, Fusarium oxysporum f radicis-lycopersici, Fusarium oxysporum f Spinacia, Fusarium oxysporum, Fusarium pallidoroseum, Fusarium patch, Fusarium poae, Fusarium proliferatum, Fusarium pseudograminearum, Fusarium redolens, Fusarium sacchari, Fusarium solani, Fusarium subglutinans, Fusarium sulphureum, Fusarium tricinctum, Fusarium verticillioides,*
*Fusarium wilt,*
*Fusicladium, Fusicladium pisicola,*
*Fusicoccum, Fusicoccum aesculi, Fusicoccum amygdali, Fusicoccum Quercus,*

G)

*Gaeumannomyces, Gaeumannomyces graminis,*

*Galactomyces, Galactomyces candidum,*

*Ganoderma, Ganoderma brownii, Ganoderma lobatum, Ganoderma megaloma, Ganoderma meredithiae, Ganoderma orbiform, Ganoderma philippii, Ganoderma sessile, Ganoderma tornatum, Ganoderma zonatum,*

*Geastrumia, Geastrumia polystigmatis,*

*Georgescheriaceae, Georgescheriales,*

*Geosmithia, Geosmithia pallida,*

*Geotrichum, Geotrichum candidum, Geotrichum klebahnii,*

*Gibberella, Gibberella acuminata, Gibberella avenacea, Gibberella baccata, Gibberella cyanogena, Gibberella fujikuroi, Gibberella intricans, Gibberella pulicaris, Gibberella stilboides, Gibberella tricincta, Gibberella xylarioides, Gibberella zeae,*

*Gibellina, Gibellina cerealis,*

*Gilbertella, Gilbertella persicaria,*

*Gjaerumiaceae,*

*Gliocladiopsis, Gliocladiopsis, Gliocladiopsis tenuis,*

*Gliocladium, Gliocladium vermoeseni,*

*Gloeocercospora, Gloeocercospora sorghi,*

*Gloeocystidiellum, Gloeocystidiellum porosum,*

*Gloeophyllum, Gloeophyllum mexicanum, Gloeophyllum trabeum,*

*Gloeoporus, Gloeoporus dichrous,*

*Gloeosporium, Gloeosporium cattleyae, Gloeosporium theae-sinensis,*

*Glomerella, Glomerella cingulata, Glomerella graminicola, Glomerella tucumanensis,*

*Gnomonia, Gnomonia caryae, Gnomonia comari, Gnomonia diaspora, Gnomonia iliau, Gnomonia ruby,*

*Golovinomyces, Golovinomyces cichoracearum,*

*Graphiola phoenicis,*

*Graphiolaceae, Graphium,*

*Graphium rigidum, Graphium rubrum,*

*Graphyllium, Graphyllium pentamerum,*

*Grovesinia, Grovesinia pyramidalis,*

*Guignardia, Guignardia bidwelli, Guignardia camelliae, Guignardia fulvida, Guignardia mangiferae, Guignardia musae, Guignardia philoprina,*

*Gymnoconia, Gymnoconia nitens Gymnopus,*

*Gymnopus, Gymnopus dryophilus,*

*Gymnosporangium, Gymnosporangium kernianum, Gymnosporangium libocedri, Gymnosporangium nelsonii, Gymnosporangium yamadae,*

H)

*Haematonectria, Haematonectria haematococca,*

*Hansenula, Hansenula subpelliculosa,*

*Hapalosphaeria, Hapalosphaeria distort,*

*Haplobasidion, Haplobasidion musae,*

*Helicobasidium, Helicobasidium compactum, Helicobasidium longisporum, Helicobasidium purpureum,*

*Helicoma, Helicoma muelleri,*

*Helminthosporium, Helminthosporium cookei, Helminthosporium solani,*

*Hendersonia, Hendersonia creberrima, Hendersonia theicola,*

*Hericium, Hericium coralloides,*

*Heterobasidion, Heterobasidion irregulare,*

*Hexagonia, Hexagonia hydnoides,*

*Hymenula, Hymenula anis,*

*Hyphodermella, Hyphodermella corrugata,*

*Hyphodontia, Hyphodontia aspera, Hyphodontia sambuci,*

*Hypoxylon, Hypoxylon tinctor,*

I)

*Inonotus, Inonotus arizonicus, Inonotus cuticularis, Inonotus dryophilus, Inonotus hispidus, Inonotus ludovicianus,*
*Irpex, Irpex destruens, Irpex lacteus,*

K)

*Kabatiella, Kabatiella caulivora,*
*Karnal bunt,*
*Koa wilt,*
*Kretzschmaria, Kretzschmaria zonata,*
*Kuehneola, Kuehneola uredinis,*
*Kutilakesa, Kutilakesa pironii,*

L)

*Laetiporus, Laetiporus ailaoshanensis, Laetiporus baudonii, Laetiporus caribensis,*
*Laetiporus conifericola, Laetiporus cremeiporus, Laetiporus gilbertsonii, Laetiporus huroniensis, Laetiporus montanus, Laetiporus portentosus, Laetiporus zonatus,*
*Laxitextum, Laxitextum bicolor,*
*Leandria, Leandria momordicae,*
*Lentinus, Lentinus tigrinus,*
*Lenzites, Lenzites betulina, Lenzites elegans,*
*Leohumicola, Leohumicola atra, Leohumicola incrustata, Leohumicola levissima,*
*Leptodontidium, Leptodontidium elatius, Leptographium, Leptographium microsporum,*
*Leptosphaeria, Leptosphaeria nodorum, Leptosphaeria acuta, Leptosphaeria cannabina, Leptosphaeria coniothyrium, Leptosphaeria libanotis, Leptosphaeria lindquistii, Leptosphaeria maculans, Leptosphaeria musarum, Leptosphaeria pratensis,*
*Leptosphaeria saccharication, Leptosphaeria woroninii,*
*Leptosphaerulina, Leptosphaerulina crassiasca, Leptosphaerulina trifolii,*
*Leptothyrium, Leptothyrium nervisedum,*
*Leptotrochila, Leptotrochila medicaginis,*
*Leucocytospora, Leucocytospora leucostoma,*
*Leucostoma, Leucostoma auerswaldii, Leucostoma canker, Leucostoma kunzei, Leucostoma persoonii,*
*Leveillula, Leveillula compositarum, Leveillula leguminosarum, Leveillula taurica,*
*Limacinula, Limacinula tenuis,*
*Linochora, Linochora graminis,*
*Loose smut,*
*Lopharia, Lopharia crassa,*
*Lophodermium, Lophodermium aucupariae, Lophodermium schweinitzii,*

M)

*Macrophoma, Macrophoma mangiferae, Macrophoma theicola,*
*Macrosporium, Macrosporium cocos,*
*Magnaporthe, Magnaporthe grisea, Magnaporthe oryzae, Magnaporthe salvinii,*
*Magnaporthiopsis,*
*Mamianiella, Mamianiella coryli,*
*Marasmiellus, Marasmiellus cocophilus, Marasmiellus stenophyllus,*
*Marasmius, Marasmius Crinis-equi, Marasmius saccharication, Marasmius semiustus,*
*Marasmius stenophyllus, Marasmius tenuissimus,*
*Massanna, Massarina walkeri,*
*Mauginiella, Mauginiella scaettae,*
*Melampsora, Melampsora Kingdom, Melampsora occidentalis,*
*Melanconis, Melanconis carthusiana,*
*Melanconium, Melanconium juglandinum,*

*Meliola, Meliola mangiferae, Meliola zangii,*

*Meruliopsis, Meruliopsis ambigua,*

*Microascus, Microascus brevicaulis,*

*Microbotryum, Microbotryum Silenes-dioicae, Microbotryum violaceum,*

*Microdochium, Microdochium spp., Microdochium bolleyi, Microdochium dimerum, Microdochium oryzae, Microdochium panattonianum, Microdochium phragmitis,*

*Microsphaera, Microsphaera coryli, Microsphaera diffused, Microsphaera ellisii, Microsphaera euphorbiae, Microsphaera hommae, Microsphaera penicillata, Microsphaera vacinii, Microsphaera verruculosa,*

*Microstroma, Microstroma juglandis,*

*Powdery mildew, Powdery mildew arachidis, Mildew-caricae papayae, Mildew indicum, Powdery mildew mangiferae, Wheat mildew,*

*Miyabeanus Cochliobolus*

*Moesziomyces, Moesziomyces bullatus,*

*Monilia, Monilia laxa,*

*Monilinia azaleae, Monilinia fructicola, Monilinia fructigena, Monilinia laxa, Monilinia oxycocci, Moniliophthora,*

*Moniliophthora roreri,*

*Monilochaetes, Monilochaetes infuscans,*

*Monochaetia, Monochaetia coryli, Monochaetia Mali,*

*Monographella, Monographella albescens, Monographella cucumerina, Monographella nivalis,*

*Monosporascus, Monosporascus cannonballus, Monosporascus eutypoides,*

*Monostichella, Monostichella coryli,*

*Mucor, Mucor circinelloides, Mucor hiemalis, Mucor paronychius, Mucor piriformis, Mucor racemosus,*

*Mycena, Mycena citricolor,*

*Mycocentrospora, Mycocentrospora acerina,*

*Mycoleptodiscus, Mycoleptodiscus terrestris,*

*Mycosphaerella, Mycosphaerella arachidis Mycosphaerella areola, Mycosphaerella berkeleyi, Mycosphaerella bolleana, Mycosphaerella brassicicola, Mycosphaerella caricae, Mycosphaerella caryigena, Mycosphaerella Cerasella, Mycosphaerella coffeicola, Mycosphaerella confusa, Mycosphaerella bloody, Mycosphaerella dendroides, Mycosphaerella eumusae, Mycosphaerella gossypina, Mycosphaerella graminicola, Mycosphaerella henningsii, Mycosphaerella juglandis, Mycosphaerella lageniformis, Mycosphaerella linicola, Mycosphaerella louisianae, Mycosphaerella musae, Mycosphaerella musicola, Mycosphaerella palmicola, Mycosphaerella pinodes,*

*Mycosphaerella pistaciarum, Mycosphaerella pistacina, Mycosphaerella platanifolia,*

*Mycosphaerella polymorpha, Mycosphaerella pomi, Mycosphaerella punctiformis,*

*Mycosphaerella pyri, Mycosphaerella recutita, Mycosphaerella rosicola, Mycosphaerella rubi, Mycosphaerella Stigmina-platani, Mycosphaerella striatiformans,*

*Mycovellosiella, Mycovellosiella concors, Mycovellosiella, Mycovellosiella koepkei,*

*Mycovellosiella vaginae, Myriogenospora, Myriogenospora aciculispora,*

*Myrothecium, Myrothecium roridum, Myrothecium verrucaria,*

N)

*Naevala, Naevala perexigua,*

*Naohidemyces, Naohidemyces vacinii,*

*Nectria, Nectria cinnabarina, Nectria ditissima, Nectria foliicola, Nectria mammoidea, Nectria mauritiicola, Nectria peziza, Nectria pseudotrichia, Nectria radicicola, Nectria ramulariae,*

*Nectriella, Nectriella pironii,*

*Nemania, Nemania diffused, Nemania serpents,*

*Neocosmospora, Neocosmospora vasinfecta,*

*Neodeightonia, Neodeightonia phoenicum,*

*Neoerysiphe, Neoerysiphe galeopsidis,*

*Neofabraea, Neofabraea perennans,*

*Neofusicoccum, Neofiisicoccum mangiferae,*

O)

*Oculimacula, Oculimacula acuformis, Oculimacula yallundae,*
*Oidiopsis, Oidiopsis gossypii,*
*Oidium manihotis,*
*Olpidium, Olpidium brassicae,*
*Omphalia, Omphalia tralucida*
*Ophiobolus, Ophiobolus anguillidae, Ophiobolus cannabinus,*
*Ophioirenina,*
*Ovulinia, Ovulinia azaleae,*
*Oxyporus, Oxyporus corticola,*
*Ozonium, Ozonium texanum,*

P)

*Passalora, Passalora fulva,*
*Peltaster, Peltaster fructicola,*
*Penicillium, Penicillium expansum, Penicillium funiculosum,*
*Peniophora,*
*Periconia, Periconia circinata,*
*Periconiella, Periconiella,*
*Peridermium, Peridermium californicum,*
*Pestalosphaeria, Pestalosphaeria concentrica,*
*Pestalotia, Pestalotia longiseta, Pestalotia rhododendri,*
*Pestalotiopsis, Pestalotiopsis adusta, Pestalotiopsis arachidis, Pestalotiopsis disseminata, Pestalotiopsis guepi-*
*ni, Pestalotiopsis leprogena, Pestalotiopsis longiseta,*
*Pestalotiopsis mangiferae, Pestalotiopsis palmarum, Pestalotiopsis sydowiana,*
*Pestalotiopsis theae,*
*Peyronellaea, Peyronellaea curtisii,*
*Pezzicula, Pezzicula alba, Pezzicula malicorticis,*
*Phacidiopycnis, Phacidiopycnis padwickii,*
*Phaeochoropsis, Phaeochoropsis mucosa,*
*Phaeocytostroma, Phaeocytostroma iliau, Phaeocytostroma saccharication,*
*Phaeoisariopsis, Phaeoisariopsis bataticola,*
*Phaeoramularia, Phaeor amularia heterospora, Phaeor amularia indica, Phaeor amularia manihotis,*
*Phaeoseptoria, Phaeoseptoria musae,*
*Phaeosphaerella, Phaeosphaerella mangiferae, Phaeosphaerella theae,*
*Phaeosphaeria, Phaeosphaeria avenaria, Phaeosphaeria herpotrichoides,*
*Phaeosphaeria microscópica, Phaeosphaeria nodorum,*
*Phaeosphaeriopsis, Phaeosphaeriopsis obtusispora,*
*Phaeotrichoconis, Phaeotrichoconis crotalariae,*
*Phakospora, Phakospora pachyrhizi, Phakopsora gossypii,*
*Phialophora, Phialophora asteris, Phialophora cinerescens, Phialophora gregata,*
*Phialophora tracheiphila,*
*Phoma, Phoma clematidina, Phoma costaricensis, Phoma cucurbitacearum, Phoma destructive, Phoma dra-*
*conis, Phoma exigua, Phoma glomerata, Phoma glycinicola,*
*Phoma herbarum, Phoma insidiosa, Phoma medicaginis, Phoma microspora, Phoma narcissi, Phoma nebulosa,*
*Phoma oncidii-sphacelati, Phoma pinodella, Phoma sclerotioides, Phoma strasseri,*
*Phomopsis, Phomopsis asparagi, Phomopsis asparagicola, Phomopsis cannabina,*
*Phomopsis coffeae Phomopsis ganjae, Phomopsis javanica, Phomopsis longicolla,*
*Phomopsis mangiferae, Phomopsis prunorum, Phomopsis sclerotioides Phomopsis theae,*
*Phragmidium, Phragmidium mucronatum, Phragmidium rosae-Pimpinellifoliae,*
*Phragmidium Rubicon idaei, Phragmidium violaceum,*
*Phyllachora, Phyllachora banksiae, Phyllachora cannabis, Phyllachora graminis,*
*Phyllachora Gratissima, Phyllachora musicola, Phyllachora pomigena, Phyllachora saccharication,*
*Phyllactinia,*
*Phyllosticta, Phyllosticta alliariaefoliae, Phyllosticta arachidis-hypogaeae, Phyllosticta batatas, Phyllosticta cap-*
*italensis, Phyllosticta carpogena, Phyllosticta coffeicola,*
*Phyllosticta concentrica, Phyllosticta coryli, Phyllosticta cucurbitacearum, Phyllosticta cyclaminella, Phyllosticta*
*errática, Phyllosticta hawaiiensis, Phyllosticta lentisci,*

*Phyllosticta manihotis, Phyllosticta micropuncta, Phyllosticta mortonii, Phyllosticta nicotianae, Phyllosticta palmetto, Phyllosticta penicillariae, Phyllosticta perseae,*

*Phyllosticta pseudocapsici, Phyllosticta sojaecola, Phyllosticta theae, Phyllosticta theicola,*

*Phymatotrichopsis, Phymatotrichopsis omnivora,*

*Physalospora, Physalospora disrupta, Physalospora perseae,*

*Physoderma, Physoderma alfalfae, Physoderma leproides, Physoderma trifolii,*

*Physopella, Physopella ampelopsidis,*

*Phytophthora, Phytophthora infestans*

*Pileolaria, Pileolaria terebinthi,*

*Piricaudiopsis, Piricaudiopsis punicae, Piricaudiopsis rhaphidophorae, Piricaudiopsis rosae,*

*Plasmopara, Plasmopara viticola,*

*Plenodomus, Plenodomus destruens, Plenodomus meliloti,*

*Pleosphaerulina, Pleosphaerulina sojicola,*

*Pleospora, Pleospora alfalfae, Pleospora betae, Pleospora herbarum, Pleospora lycopersici, Pleospora soon, Pleospora theae,*

*Pleuroceras,*

*Podosphaera, Podosphaera fuliginea, Podosphaera fusca, Podosphaera leucotricha,*

*Podosphaera macularis, Podosphaera pannosa,*

*Polyscytalum, Polyscytalum pustulans,*

*Poria, Porta hypobrunnea,*

*Postia, Postia tephroleuca,*

*Pseudocercospora, Pseudocercospora arecacearum, Pseudocercospora cannabina,*

*Pseudocercospora fuligena, Pseudocercosporella herpotrichoides, Pseudocercospora gunnerae, Pseudocercospora pandoreae, Pseudocercospora puderi,*

*Pseudocercospora rhapisicola, Pseudocercospora theae, Pseudocercospora vitis,*

*Pseudocercosporella capsellae,*

*Pseudocochliobolus, Pseudocochliobolus eragrostidis,*

*Pseudoepicoccum, Pseudoepicoccum cocos,*

*Pseudopeziza, Pseudopeziza jonesii, Pseudopeziza medicaginis, Pseudopeziza trifolii,*

*Pseudoseptoria, Pseudoseptoria donacis,*

*Puccinia, Puccinia angustata, Puccinia arachidis, Puccinia aristidae, Puccinia asparagi,*

*Puccinia cacabata, Puccinia campanulae, Puccinia carthami, Puccinia coronata,*

*Puccinia dioicae, Puccinia erianthi, Puccinia extensicola, Puccinia helianthi, Puccinia hordei, Puccinia jaceae, Puccinia kuehnii, Puccinia malvacearum, Puccinia mariae-wilsoniae, Puccinia melanocephala, Puccinia menthae, Puccinia oxalidis, Puccinia pelargonii-zonalis, Puccinia pittieriana, Puccinia poarum, Puccinia purpurea, Puccinia recondita, Puccinia schedonnardii, Puccinia sessilis, Puccinia striiformis, Puccinia striiformis, Puccinia subnitens, Puccinia substriata, Puccinia verruca, Puccinia xanthii,*

*Pucciniaceae,*

*Pucciniastrum, Pucciniastrum americanum, Pucciniastrum arcticum, Pucciniastrum epilobii, Pucciniastrum hydrangeae,*

*Pycnostysanus, Pycnostysanus azaleae,*

*Pyrenochaeta, Pyrenochaeta lycopersici, Pyrenochaeta terrestris,*

*Pyrenopeziza, Pyrenopeziza brassicae amichloridium,*

*Pyrenophora, Pyrenophora avenae, Pyrenophora chaetomioides, Pyrenophora graminea, Pyrenophora seminiperda, Pyrenophora teres, Pyrenophora teres f. maculata,*

*Pyrenophora teres f. teres tritici, Pyrenophora tritici-repentis,*

*Pyricularia, Pyricularia oryzae,*

*Pythium spp.,*

*Phytophthora infestans*

R)

*Ramichloridium musae,*

*Ramularia, Ramularia collo-cygni, Ramularia beticola, Ramularia coryli, Ramularia cyclaminicola, Ramularia macrospora, Ramularia menthicola, Ramularia necator,*

*Ramularia primulae, Ramularia spinaciae, Ramularia subtilis, Ramularia tenella,*

*Ramularia vallisumbrosae,*

*Ramulispora, Ramulispora sorghi, Ramulispora sorghicola,*

*Rhinocladium, Rhinocladium corticola,*

*Rhizoctonia, Rhizoctonia cerealis, Rhizoctonia leguminicola, Rhizoctonia oryzae,*

*Rhizoctonia ruby, Rhizoctonia solani,*

*Rhizophydium, Rhizophydium graminis,*

*Rhizopus, Rhizopus arrhizus, Rhizopus circinans, Rhizopus microsporus, Rhizopus oryzae, Rhynchosporium,*

*Rhynchosporium secalis,*

*Rhytisma, Rhytisma punctatum, Rhytisma vitis,*

*Rigidoporus, Rigidoporus vinctus,*

*Rosellinia, Rosellinia arcuata, Rosellinia bunodes, Rosellinia necatrix, Rosellinia pepo,*

S)

*Saccharicola, Saccharicola taiwanensis,*

*Sarocladium, Sarocladium oryzae,*

*Schiffnerula, Schiffrierula cannabis,*

*Schizophyllum, Schizophyllum commune,*

*Schizopora, Schizopora avipora,*

*Schizothyrium, Schizothyrium pomi,*

*Sclerophthora, Sclerophthora macrospora,*

*Sclerotinia, Sclerotinia borealis, Sclerotinia Bulborum, Sclerotinia minor, Sclerotinia ricini, Sclerotinia sclerotiorum, Sclerotinia spermophila, Sclerotinia trifoliorum,*

*Sclerotium,*

*Sclerotium cinnamomi, Sclerotium delphinii,*

*Scytinostroma, Scytinostroma galactinum,*

*Seimatosporium, Seimatosporium mariae, Seimatosporium rhododendri,*

*Selenophoma, Selenophoma linicola,*

*Septobasidium, Septobasidium bogoriense, Septobasidium euryae-groi, Septobasidium gaoligongense, Septobasidium pilosum, Septobasidium polygoni, Septobasidium pseudopedicellatum, Septobasidium theae,*

*Septocyta, Septocyta ruborum,*

*Septoria, Septoria ampelina, Septoria azaleae, Septoria bataticola, Septoria campanulae, Septoria cannabis, Septoria cucurbitacearum, Septoria darrowii, Septoria dianthi, Septoria eumusae, Septoria glycines, Septoria helianthi, Septoria humuli,*

*Septoria hydrangeae, Septoria lactucae, Septoria lycopersici, Septoria lycopersici,*

*Septoria menthae, Septoria passerinii, Septoria pisi, Septoria rhododendri, Septoria secalis, Septoria selenophomoides, Septoria wisteria*

*Serpula, Serpula lacrymans,*

*Setosphaeria, Setosphaeria rostrata, Setosphaeria turcica,*

*Spencermartinsia, Spencermartinsia pretoriensis,*

*Sphaceloma, Sphaceloma arachidis, Sphaceloma menthae, Sphaceloma perseae,*

*Sphaceloma poinsettiae, Sphaceloma saccharication, Sphaceloma theae,*

*Sphacelotheca, Sphacelotheca reiliana, Sphaerotheca castagnei,*

*Sphaerulina, Sphaerulina oryzina, Sphaerulina rehmiana, Sphaerulina ruby,*

*Sphenospora, Sphenospora kevorkianii,*

*Spilocaea, Spilocaea oleaginea,*

*Sporisorium, Sporisorium cruentum, Sporisorium ehrenbergii, Sporisorium scitamineum,*

*Sporisorium sorghi,*

*Sporonema, Sporonema phacidioides,*

*Stagonospora, Stagonospora avenae, Stagonospora meliloti, Stagonospora recedens,*

*Stagonospora saccharication, Stagonospora tainanensis,*

*Stagonosporopsis,*

*Stegocintractia, Stegocintractia junci,*

*Stemphylium, Stemphylium alfalfae, Stemphylium bolickii, Stemphylium cannabinum,*

*Stemphylium globuliferum, Stemphylium lycopersici, Stemphylium sarciniforme,*

*Stemphylium solani, Stemphylium vesicarium,*

*Stenella, Stenella anthuriicola,*

*Stigmatomycosis,*

*Stigmina, Stigmina carpophila, Stigmina palmivora, Stigmina platani-racemosae,*

*Stromatinia, Stromatinia cepivora,*

*Sydowiella, Sydowiella depressula,*
*Sydowiellaceae,*
*Synchytrium, Synchytrium endobioticum,*

T)

*Tapesia, Tapesia acuformis, Tapesia yallundae,*
*Taphrina, Taphrina coryli, Taphnna potentillae,*
*Thanatephorus, Thanatephorus cucumeris,*
*Thecaphora, Thecaphora solani,*
*Thielaviopsis, Thielaviopsis basicola, Thielaviopsis ceramica,*
*Thyrostroma, Thyrostroma compactum,*
*Tiarosporella, Tiarosporella Urbis-rosarum,*
*Tilletia, Tilletia barclayana, Tilletia caries, Tilletia controversa, Tilletia laevis, Tilletia tritici,*
*Tilletia walkeri,*
*Tilletiariaceae, Togniniaceae,*
*Tranzschelia, Tranzschelia pruni-spinosae,*
*Trichoderma, Trichoderma koningii, Trichoderma paucisporum, Trichoderma Songyi,*
*Trichoderma theobromicola, Trichoderma viride,*
*Tubercularia, Tubercularia lateritia,*
*Tunstallia, Tunstallia aculeata,*
*Typhula, Typhula blight, Typhula idahoensis, Typhula incarnata, Typhula ishikariensis,*
*Typhula variabilis,*

U)

*Ulocladium, Ulocladium syndicated,*
*Uncinula,*
*Uredo, Uredo behnickiana, Uredo kriegeriana, Uredo musae, Uredo nigropuncta, Uredo rangelii,*
*Urocystis, Urocystis agropyri, Urocystis brassicae, Urocystis occulta,*
*Uromyces, Uromyces apiosporus, Uromyces appendiculatus, Uromyces beticola,*
*Uromyces ciceris-arietini, Uromyces dianthi, Uromyces euphorbiae, Uromyces graminis,*
*Uromyces inconspicuus, Uromyces lineolatus, Uromyces musae, Uromyces oblongus,*
*Uromyces pisi-sativi, Uromyces proëminens, Uromyces medicaginis, Uromyces trifolii-repentis, Uromyces vi-*
*ciae-fabae,*
*Urophlyctis, Urophlyctis leproides, Urophlyctis trifolii smuts,*
*Ustilaginoides, Ustilaginoides virens,*
*Ustilago, Ustilago avenae, Ustilago esculenta, Ustilago hordei, Ustilago maydis, Ustilago nigra, Ustilago nuda,*
*Ustilago scitaminea, Ustilago tritici,*

V)

*Vankya, Vankya ornithogali,*
*Velvet blight,*
*Venturia, Venturia inaequalis. Venturia carpophila,*
*Veronaea, Veronaea musae,*
*Verticillium, Verticillium albo-atrum, Verticillium alfalfae, Verticillium dahliae, Verticillium isaacii, Verticillium kle-*
*bahnii, Verticillium longisporum, Verticillium nonalfalfae,*
*Verticillium theobromae, Verticillium wilt, Verticillium zaregamsianum,*

W)

*Waitea, Vllaitea circinata,*
*Westea,*
*Wheat leaf rust,*
*VVuestneiopsis, Vlluestneiopsis georgiana,*

X)

*Xeromphalina, Xeromphalina fraxinophila*

Z)

*Zopa, Zopa rhizophila,*
*Zygosaccharomyces, Zygosaccharomyces bailii, Zygosaccharomyces florentinus,*
*Zythiostroma,*
*Zymoseptoria, Zymoseptoria tritici.*

In a preferred aspect, the alga used for obtaining the supernatant is *Amphidinium carterae,* where other members from the genus *Amphidinium* can be used such as, for example: *Amphidinium achromaticum, Amphidinium aculeatum, Amphidinium acutissimum, Amphidinium acutum, Amphidinium alinii, Amphidinium aloxalocium, Amphidinium amphidinioides, Amphidinium asymmetricum, Amphidinium aureum, Amphidinium belauense, Amphidinium bidentatum, Amphidinium beeps, Amphidinium boekhoutensis, Amphidinium boggayum, Amphidinium caerulescens, Amphidinium carbunculus, Amphidinium carterae, Amphidinium celestinum, Amphidinium chattonii, Amphidinium coeruleum, Amphidinium conradii, Amphidinium conus, Amphidinium coprosum, Amphidinium corallinum, Amphidinium corpulentum, Amphidinium crassum, Amphidinium cristatum, Amphidinium cucurbita, Amphidinium cucurbitella, Amphidinium cupulatisquama, Amphidinium curvatum, Amphidinium cyaneoturbo, Amphidinium dentatum, Amphidinium discoidal, Amphidinium dubium, Amphidinium eilatiensis, Amphidinium emarginatum, Amphidinium fastigium, Amphidinium lum Bohm, Amphidinium a gellons, Amphidinium exum, Amphidinium galbanum, Amphidinium gibbosum, Amphidinium glaucovirescens, Amphidinium glaucum, Amphidinium globosum, Amphidinium hadai, Amphidinium herdmanii, Amphidinium incoloratum, Amphidinium inatum, Amphidinium kesselitzii, Amphidinium kesslitzii, Amphidinium klebsii, Amphidinium lacunarum, Amphidinium lanceolatum, Amphidinium lefevrei, Amphidinium lilloense, Amphidinium lissae, Amphidinium longum, Amphidinium luteum, Amphidinium machapungarum, Amphidinium macrocephalum, Amphidinium mammillatum, Amphidinium manannini, Amphidinium mananninii, Amphidinium massartii, Amphidinium mootonorum, Amphidinium mucicola, Amphidinium nasutum, Amphidinium obliquum, Amphidinium obrae, Amphidinium oceanicum, Amphidinium oculatum, Amphidinium operculatum, Amphidinium operculatum var. steinii, Amphidinium ornithocephalum, Amphidinium ovoideum, Amphidinium ovum, Amphidinium pacicum, Amphidinium pelagicum, Amphidinium phthartum, Amphidinium psammophila, Amphidinium psittacus, Amphidinium purpureum, Amphidinium pusillum, Amphidinium rhynchocephalum, Amphidinium roseolum, Amphidinium ruttneri, Amphidinium salinum, Amphidinium schilleri, Amphidinium schroederi, Amphidinium scissum, Amphidinium sphagnicola, Amphidinium sphenoid, Amphidinium steinii, Amphidinium stellatum, Amphidinium stigmatum, Amphidinium sulcatum, Amphidinium tortum, Amphidinium trochodinioides, Amphidinium trochodinoides, Amphidinium trulla, Amphidinium truncatum, Amphidinium turbo, Amphidinium vernal, Amphidinium vigrense, Amphidinium vitreum, Amphidinium vittatum, Amphidinium wigrense, Amphidinium yoorugurrum,* or *Amphidinium yuroogurrum.*

The following definitions are provided for the interpretation of the present invention:

- The term "comprises" means including, but is not limited to what follows the word "comprises". Therefore, the use of the term "comprises" indicates that the listed elements are compulsory, but that other added elements may be present.
- The expression "consists of" means including and is limited to what follows the expression "consists of". Therefore, the expression "consists of" indicates that the listed elements are compulsory and that other added elements would not be included.
- "Phytosanitary" formulation or "biopesticide" refers to a formulation including active substances which are obtained from living organisms and used to prevent, repel, kill, or mitigate any pest or agent that causes damage to plant cultures, humans, or other animals. Pests can be insects, animals, unwanted plants, microorganisms (bacteria, fungi, virus), and prions (proteins which can act as infectious agents).

Brief Description of the Figures

Figure 1. Diagram of the process proposed for obtaining the phytosanitary formulation of the invention from supernatant originating from the culture of the species *Amphidinium carterae.*

Figure 2. Depiction of the % of inhibition with respect to the species *Fusarium oxysporum* for several concentrations of the formulation.

Figure 3. Images of fungal growth in an agar medium (A) in the presence of amphidinols (APDs) and (B) in the absence of APDs.

Detailed Description of the invention

Embodiments of the invention are shown below for the purpose of illustrating said invention.

Example 1. Process for obtaining the phytosanitary formulation of the invention

The process proposed in the present invention can be carried out by using various equipment and conditions. Dinoflagellates from the genus *Amphidinium* can be cultured in a photobioreactor at least in a fed-batch mode for a number of days long enough for substances with phytosanitary activity to accumulate in a sufficient concentration in the culture supernatant: in the example, the number of days was 14 days at 18°C using lighting that provides 120 $\mu$E m-2 s-l and the F/2 medium as the culture medium (N/P=5), corresponding to a late stationary phase. Any other culture method and environmental conditions are not excluded.

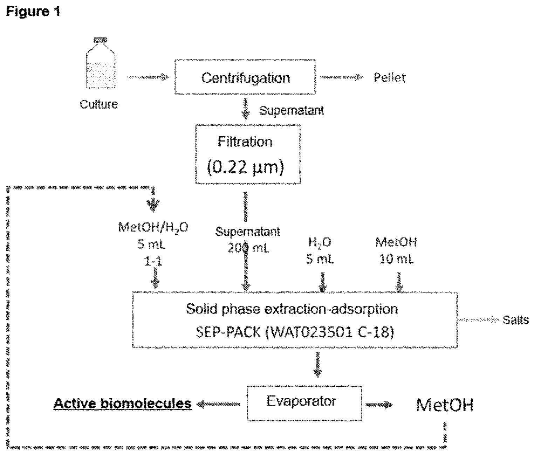

Cells are then separated from the supernatant, for example, by means of centrifugation at 4000 rpm (2723 g) for 5 minutes, although other separation methods which allow for the same are not excluded. The supernatant is intended for the process of obtaining the phytosanitary product or biopesticide and the biomass is intended for the extraction of other products of interest. Bacteria and cell fragments will then be removed, for example, filtering the supernatant obtained by passing it through filters having a pore size of 0.22 $\mu$m (any other pore size is not excluded). The next step of the process consists of a solid-liquid extraction by means of fixed bed adsorption chromatography in which the supernatant is passed pasar through sep-pack C-18® columns in which, through a series of steps, the culture medium and the salts present are removed, such that active biomolecules dissolved in methanol are obtained, as shown in Figure 1. Finally, methanol which can be recovered and reused in a new extraction is evaporated and water is added to the desired concentration.

A preferred embodiment of the invention is shown in Figure 1. In said embodiment, once it is estimated that *Amphidinium carterae* culture has aged, and therefore the secretion of active biomolecules into the medium is high, the culture is harvested by means of centrifugation (described above), such that the supernatant is collected and the biomass is stored for obtaining other products. The next steps comprises filtering the supernatant (described above) to remove cells or cell debris that may remain suspended in the supernatant. A solid-liquid extraction is then performed by means of fixed bed adsorption chromatography passing the supernatant through C-18 columns for the purpose of removing the culture medium and salts, such that active biomolecules with higher purity are obtained. To carry out this process, the column is first conditioned by passing 5 mL of a methanol:water mixture in a proportion of 1:1. Next, 200 mL of the previously filtered supernatant are loaded in the column such that active biomolecules are retained in the column and the culture medium passes through same to ultimately be disposed of. The sep-pack is then washed with 5 mL of distilled water to remove the salts that have been retained, and the metabolites are finally discharged by washing with 10 mL of methanol. Once the product of interest is suspended in methanol, it is evaporated using a vacuum rotavapor to finally resuspend the dry matter in distilled water. This dry extract is analyzed by means of NMR to quantify its metabolite contents. Table 1 shows the metabolite contents in the dry extract of the supernatant corresponding to a culture with a biomass concentration of 0.2 g/L.

Table 1

| Metabolite | mg/L | % of total metabolites |
|---|---|---|
| Acetate | 0.044 ±0.002 | 5.022 ±0.251 |
| Ethanol | 0.028 ±0.001 | 3.220 ±0.161 |
| Choline | 0.001 ±0.00006 | 0.143 ±0.007 |
| Glycerol | 0.224 ±0.011 | 25.572 ±1.278 |
| Amphidinols | 0.325 ±0.0163 | 37.222 ±1.861 |
| Phenylalanine | 0.008 ±0.0004 | 0.894 ±0.045 |
| Formate | 0.030 ±0.0015 | 3.415 ±0.171 |
| Alanine | 0.054 ±0.003 | 6.165 ±0.308 |
| Lactate | 0.160 ±0.008 | 18.346 ±0.917 |

Example 2. Inhibition of the species *Fusarium oxysporum sp. Melonis* (FOM)

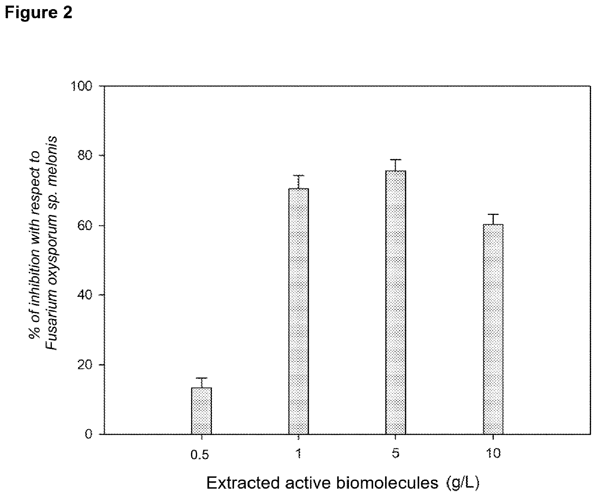

In order to assay the phytosanitary formulation obtained, the product was brought to a final concentration of between 1 g/L and 5 g/L. An assay was therefore performed to determine the percentage of inhibition of the FOM fungus in contact with the extract obtained from the culture of *Amphidinium carterae*. Control was provided in one of the Petri dishes in which the fungus was left to grow on the agar in the Petri dish, and two other dishes were then provided in which the fungus was placed in the center and the extract obtained from *Amphidinium* was placed inside the 4 wells at 1 and 5 g/L, respectively. A FOM fungus inhibition halo was observed when the extract obtained from the culture supernatant of *A. carterae* was placed in the Petri dish at 1 and 5 g/L. To rule out that the antifungal effect observed in the extracts of *Amphidinium* may originate from the seawater in which they were cultured, a control was provided by introducing in the wells of the dish seawater after having treated it in the same manner as the extracts, i.e., following the experimental method of Figure 1.
The result of this assay is illustrated in Figure 2 which depicts the % of inhibition with respect to the species *Fusarium oxysporum* for the assayed samples. The % of inhibition is calculated with respect to the control based on the areas of growth of the fungus according to the following equation:

$$\text{\% of inhibition with respect to FOM} = 100 - \left(\frac{AP}{AC} * 100\right)$$

wherein:

- AP: area of growth of the fungus in the target dish.
- AC: Area of growth of the fungus in the control dish.

Example 3. Validation of the antifungal activity of the formulation of the invention

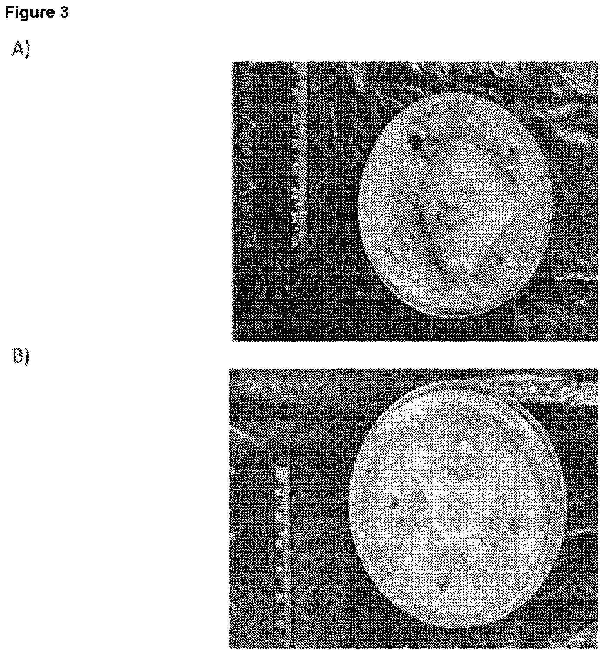

The antifungal activity of the supernatant obtained in the presence and absence of amphidinols (APDs) is validated below.
In that sense, Figure 3A shows the growth of the fungus with respect to a supernatant containing APDs. According to the analysis shown in Table 2, in the sample containing 4.13% of APDs, the % of inhibition observed was 36.9% (Figure 3A). However, the sample of Figure 3B, with the absence of APDs but with the presence of other compounds of interest such as phenylalanine or formate, gives rise to a % of inhibition of about 10.21%, so it can be concluded that phenylalanine and formate exhibit inhibitory activity.

Table 2

| Metabolite | % Percentage by weight | |
| --- | --- | --- |
| | A | B |
| Threonine | 4.07 | 0 |
| Acetate | 0.28 | 0.44 |
| Glycerol | 4.09 | 2.09 |
| Amphidinols | 4.13 | 0 |
| Fumarate | 0.13 | 0.05 |
| Phenylalanine | 0 | 0.86 |
| Tryptophan | 0 | 2.14 |
| Formate | 0.10 | 0.14 |
| Uridinine | 0.83 | 0.72 |
| Uracil | 0.89 | 0 |
| Choline | 0.12 | 0 |

Nuclear magnetic resonance analysis of two supernatants, A with APDs and B without APDs
To rule out that the antifungal effect is due solely to the presence of APDs, dishes were provided with solutions at 5 g/L of the following compounds shown in Table 1 and Table 2:

- L-Phenylalanine (Thermo Fisher Scientific, Waltham, Massachusetts, USA).
- L-Alanine (Thermo Fisher Scientific, Waltham, Massachusetts, USA).
- Sodium formate (Sigma Aldrich, St. Luis, Missouri, USA).
- Ammonium formate (Sigma Aldrich, St. Luis, Missouri, USA).
- Glycerol (Panreac S.A, Barcelona, Spain).
- Ethanol (Panreac S.A, Barcelona, Spain).
- Anhydrous sodium acetate (Panreac S.A, Barcelona, Spain).

Table 3 shows three compounds which exhibit a greater inhibition of the fungus, specifically: alanine, phenylalanine, and formate.

Table 3

| | Concentration | % of inhibition |
|---|---|---|
| **Alanine** | 5 g/L | 9.23 ± 0.71 |
| **Phenylalanine** | 5 g/L | 16.15 ± 1.05 |
| **Sodium formate** | 5 g/L | 13.38 ± 0.95 |
| Sodium acetate | 5 g/L | 1.54 ± 0.05 |
| Glycerol | 5 g/L | 1.85 ± 0.10 |
| Ammonium formate | 5 g/L | 1.54 ± 0.15 |
| Ethanol | 5 g/L | 3.07 ± 0.45 |

Percentages of inhibition of the solutions prepared with a concentration of 5 g/L from the compounds described above with respect to the fungus *F. oxysporum*

A concentration screening was then performed with the 3 compounds in which the highest percentage of inhibition of the fungus has been observed: alanine, phenylalanine, and sodium formate (Table 4)

Table 4

| Metabolite | Concentration (g/L) | | | |
|---|---|---|---|---|
| | 2 | 5 | 7.5 | 10 |
| Alanine | 9.24 ± 0.85 | 9.48 ± 1.06 | 13.27 ± 1.01 | 14.45 ± 0.87 |
| Phenylalanine | 17.01 ± 2.24 | 19.5 ± 1.85 | 19.23 ± 1.65 | 21.7 ± 1.74 |
| Sodium formate | 5.66 ± 0.41 | 12.33 ± 0.98 | 12.54 ± 1.54 | 12.14 ± 0.52 |

Percentages of inhibition obtained when the fungus is subjected to L-alanine, L-phenylalanine, and sodium formate solutions at 2, 5, 7.5, and 10 g/L

In view of the results shown in Table 4, the three assayed compounds showed inhibition of the fungus at the different assayed concentrations, with the antifungal activity of phenylalanine standing out, particularly at a concentration of 10 g/L.

**Claims**

1. A phytosanitary formulation comprising: alanine, phenylalanine, and formate.

2. The phytosanitary formulation according to claim 1, consisting of: alanine, phenylalanine, and formate.

3. The phytosanitary formulation according to any of the preceding claims, wherein alanine, phenylalanine, or formate are at a concentration between 2 and 10 g/L.

4. The phytosanitary formulation according to any of the preceding claims, wherein alanine is at a concentration of about 10 g/L, phenylalanine is at a concentration of about 10 g/L, and formate is at a concentration of about 7.5 g/L.

5. The phytosanitary formulation according to any of claims 1, 3, and 4, further comprising amphidinols.

**6.** The phytosanitary formulation according to any of claims 1, 3, 4, and 5, further comprising amphidinols at a concentration of less than 2 g/L.

**7.** Use of the formulation according to any of claims 1 to 6 as a phytosanitary product.

**8.** Use of the formulation according to any of claims 1 to 6 as an antifungal product.

**9.** Use of the formulation according to any of claims 1 to 6 as an antifungal product against fungi from the genus *Fusarium,* preferably *Fusarium oxysporum.*

**10.** A method for obtaining the phytosanitary formulation of claims 1 to 6 which comprises:

   a. providing microalgae from the genus *Amphidinium* in a culture medium suitable for the growth thereof,
   b. obtaining supernatant once the culture is processed, and
   c. isolating the active components present in the supernatant.

**11.** The method according to claim 10 for obtaining an antifungal phytosanitary formulation.

**12.** The method according to any of claims 10 or 11 for obtaining an antifungal phytosanitary formulation against fungi from the genus *Fusarium,* preferably *Fusarium oxysporum.*

**13.** The method according to any of claims 10 to 12 for obtaining a phytosanitary formulation, wherein step a) comprises providing the alga *Amphidinium carterae* in a culture medium suitable for the growth thereof.

**Figure 1**

**Figure 2**

**Figure 3**

A)

B)

## INTERNATIONAL SEARCH REPORT

| International application No. |
| --- |
| PCT/ES2022/070394 |

A. CLASSIFICATION OF SUBJECT MATTER

See extra sheet

According to International Patent Classification (IPC) or to both national classification and IPC

B. FIELDS SEARCHED

Minimum documentation searched (classification system followed by classification symbols)
A01N, A01P

Documentation searched other than minimum documentation to the extent that such documents are included in the fields searched

Electronic data base consulted during the international search (name of data base and, where practicable, search terms used)

EPODOC, INVENES, WPI, TXTE, NPL, EMBASE, BIOSIS, AGRICOLA, SCISEARCH, CA, INTERNET

C. DOCUMENTS CONSIDERED TO BE RELEVANT

| Category* | Citation of document, with indication, where appropriate, of the relevant passages | Relevant to claim No. |
| --- | --- | --- |
| X | WO 03059063 A1 (SUMMERDALE INC ET AL.) 24/07/2003, the whole document; in particular, claims 1 and 9; page 9, line 25 to page 10, line 21. | 1, 3-9 |
| A | US 2019174768 A1 (THIEBEAULD DE LA CROUEE ODON ET AL.) 13/06/2019, the whole document; in particular, claims. | 1-13 |
| A | MOLINA-MIRAS, A et al. "A pilot-scale bioprocess to produce amphidinols from the marine microalga *Amphidinium carterae*: Isolation of a novel analogue", Algal Research, 2018, Vol. 31, pages 87-98, DOI: https://doi.org/10.1016/j.algal.2018.01.010, the whole document; in particular, page 96. | 1-13 |
| A | US 2020100499 A1 (THOMAS YANN ET AL.) 02/04/2020, the whole document; in particular, claims. | 1-13 |

☒ Further documents are listed in the continuation of Box C.      ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance. | |
| "E" earlier document but published on or after the international filing date | |
| "L" document which may throw doubts on priority claim(s) or which is cited to establish the publication date of another citation or other special reason (as specified) | "X" document of particular relevance; the claimed invention cannot be considered novel or cannot be considered to involve an inventive step when the document is taken alone |
| "O" document referring to an oral disclosure use, exhibition, or other means. | "Y" document of particular relevance; the claimed invention cannot be considered to involve an inventive step when the document is combined with one or more other documents, such combination being obvious to a person skilled in the art |
| "P" document published prior to the international filing date but later than the priority date claimed | "&" document member of the same patent family |

| Date of the actual completion of the international search | Date of mailing of the international search report |
| --- | --- |
| 25/10/2022 | (25/10/2022) |
| Name and mailing address of the ISA/ <br><br> OFICINA ESPAÑOLA DE PATENTES Y MARCAS <br> Paseo de la Castellana, 75 - 28071 Madrid (España) <br> Facsimile No.: 91 349 53 04 | Authorized officer <br> A. Maquedano Herrero <br><br> Telephone No. 91 3495474 |

Form PCT/ISA/210 (second sheet) (January 2015)

## INTERNATIONAL SEARCH REPORT

Information on patent family members

| International application No. |
|---|
| PCT/ES2022/070394 |

| Patent document cited in the search report | Publication date | Patent family member(s) | Publication date |
|---|---|---|---|
| WO03059063 A1 | 24.07.2003 | US2004266852 A1<br>US7741244 B2<br>AU2003202265 A1 | 30.12.2004<br>22.06.2010<br>30.07.2003 |
| US2019174768 A1 | 13.06.2019 | RU2018146606 A<br>RU2018146606 A3<br>BR112018075354A2<br>CN109843068 A<br>CA3026725 A1<br>EP3468369 A1<br>WO2017211998 A1<br>FR3052337 A1<br>FR3052337 B1 | 14.07.2020<br>11.03.2021<br>19.03.2019<br>04.06.2019<br>14.12.2017<br>17.04.2019<br>14.12.2017<br>15.12.2017<br>29.06.2018 |
| US2020100499 A1 | 02.04.2020 | US2022192194 A1<br>RU2019144319 A<br>RU2019144319 A3<br>JP2020522581 A<br>CN111315216 A<br>BR112019025727A2<br>US11278027 B2<br>CA3066485 A1<br>EP3634129 A1<br>WO2018224675 A1<br>FR3067221 A1<br>FR3067221 B1 | 23.06.2022<br>09.07.2021<br>23.09.2021<br>30.07.2020<br>19.06.2020<br>23.06.2020<br>22.03.2022<br>13.12.2018<br>15.04.2020<br>13.12.2018<br>14.12.2018<br>14.08.2020 |

Form PCT/ISA/210 (patent family annex) (January 2015)

# INTERNATIONAL SEARCH REPORT

International application No.

PCT/ES2022/070394

## CLASSIFICATION OF SUBJECT MATTER

*A01N37/44* (2006.01)
*A01N37/02* (2006.01)
*A01N65/03* (2009.01)
*A01P3/00* (2006.01)

Form PCT/ISA/210 (extra sheet) (January 2015)